# EUROPEAN PATENT SPECIFICATION

(11) **EP 0 587 693 B1**
(45) Date of publication and mention of the grant of the patent: **27.12.1995**
(21) Application number: 92911837.0
(22) Date of filing: 27.05.1992
(51) Int. Cl.: B23B 27/04, B23B 29/04

(54) **TOOL HOLDER FOR CLAMPING INSERTS, USING A RESILIENT L-SHAPED CLAMP**
WERKZEUGHALTER ZUM SPANNEN VON EINSÄTZEN DURCH EINE FEDERNDE L-FÖRMIGE SPANNPRATZE
PORTE-OUTIL SERVANT A FIXER DES INSERTS AU MOYEN D'UN ELEMENT DE SERRAGE SOUPLE EN FORME DE L

(30) Priority: 04.06.1991 SE 9101690
(43) Date of publication of application: 23.03.1994
(73) Proprietor: MIRCONA AB, S-801 33 Gävle (SE)
(72) Inventor: MIHIC , Wlajko, S-802 67 Gävle (SE)
(74) Representative: Nordén, J. Ake
(86) International application number: PCT/SE92/00359
(87) International publication number: WO 92/21466

(56) References cited:
- DE-A- 3 434 089
- DE-B- 2 548 870
- GB-A- 1 370 035
- GB-A- 1 402 946
- GB-B- 19 851
- US-A- 1 652 196
- US-A- 3 557 417
- US-A- 3 568 283
- US-A- 4 545 705

## Description

### Technical field of the invention

This invention relates to a tool holder having the features of the preamble of claim 1 (see DE-A-2 548 870). Here the tool holder may be clamped in a seat at the turret and the insert holder in the tool holder.

### Prior art

A known clamping piece or tool holder is divided in a base part having abutments for clamping wedges and screws for securing the base part in grooves at the turret body and a carrier piece for the tool or insert holder which later piece as also the base piece has complementary guiding and positioning portions, on securing the pieces to each other engaging each other and localizing the parts as well as at the carrier piece arranged setable and adjustable guides for clamping bodies pressing the tool holder towards an abutment.

Another known embodiment includes a tool holder made in one piece with a rear protruding portion intended to be wedged inside the turret body groove and having an elongated clamping rail intended to secure the tool holder by means of screws passing through holes in the rail and inserted into the holder body, an opposite edge of the holder abutting a seat at the holder proper.

DE, A1 3 434 089 and GB, B 19851/1909 disclose arrangements for securing parting tool holders and tools by means of an essentially L-shaped clamping piece one leg of which rests in an elongated groove at the base part whereas the other leg engages a tool holder or tool in order to press same against a seat when pressed towards the base part by means of one or more screws. The former publication also reveals a weakening slot made in the leg of the clamping piece engaging the elongated groove to facilitate the movement of the other leg towards the tool holder. The later publication discloses a rigid L-shaped clamping piece, on setting the screw swinging the clamping piece around an axis at the line of engagement along the base part groove. The corresponding axis of the weakened leg clamping piece follows the bottom of the said weakening groove. The positioning of the said axes below a plane perpendicular to the plane of the tool holder and passing the point or line of engagement at the free edge of the tool holder implies that any force excerted towards the tool holder engaging leg of the clamping piece, will result in a division of the force acting against the tool holder edge in one component acting in the plane of the tool holder and one component pushing outwardly so as to remove the holder from its seat.

DE, B2 2 548 870 and US, A 4 545 705 disclose arrangements similar to the one shown in GB, B 19851, i.e. clamping pieces having one leg resting in a groove and the other leg engaging a tool holder or tool. In all cases the clamping piece swings around an axis situated well below a plane through the upper edge of the tool or tool holder.

### Aspects of the invention

One aspect of this invention is to bring about a new tool holder having a simple construction and easily manufactured without complicated machining and the like. Another aspect is to fulfill a since long felt need of facilitating the change of tool holders without necessitating dismantling of a multitude of pieces.

Still another aspect is to make a new tool holder device so arranged as to secure as stable as possible a clamping of the tool holder by arranging the contact directions of the clamping piece.

### Summary of the invention

The tool holder according to this invention comprises the features of claim 1. Such tool holder may include an elongated main part having a number of longitudinal grooves, ridges and surfaces designed to form both a rearwardly extending back portion insertable into the turret body recess and securable therein by means of known wedging means, one forwardly protruding portion having an obliquely localized abutment surface together with a joining outwardly facing surface forms to position for the insert holder defining parts, wherein the opposite edge of the outwardly facing surface is joined with a backwardly obliquely arranged surface in turn passing into an elongated groove having parallel walls also parallel with said outwardly facing surface and a bottom at right angles with said surface. The portion having the rearwardly obliquely arranged surface, presents a number of threaded bores which are essentially parallel with the surface defining the outwardly facing site for the insert holder.

At the main part there are mountable two or more essentially L-shaped clamping pieces having a non significant length dimension and having one leg with one end portion having a thickness closely corresponding to the width of the elongated groove at the main part and one leg having an oblique inner abutment face and at least one through hole essentially parallel with the formal leg and having an adjoining abutment surface for the head of a screw which surface is obliquely arranged so that a screw passed through the bore and into a threaded bore at the main part will engage essentially only at the portion of the abutment surface closest to the leg end having the obliquely arranged surface.

The clamping pieces have at the point where the two legs are joined a recess facilitating the bending of the material.

### Brief description of the drawings

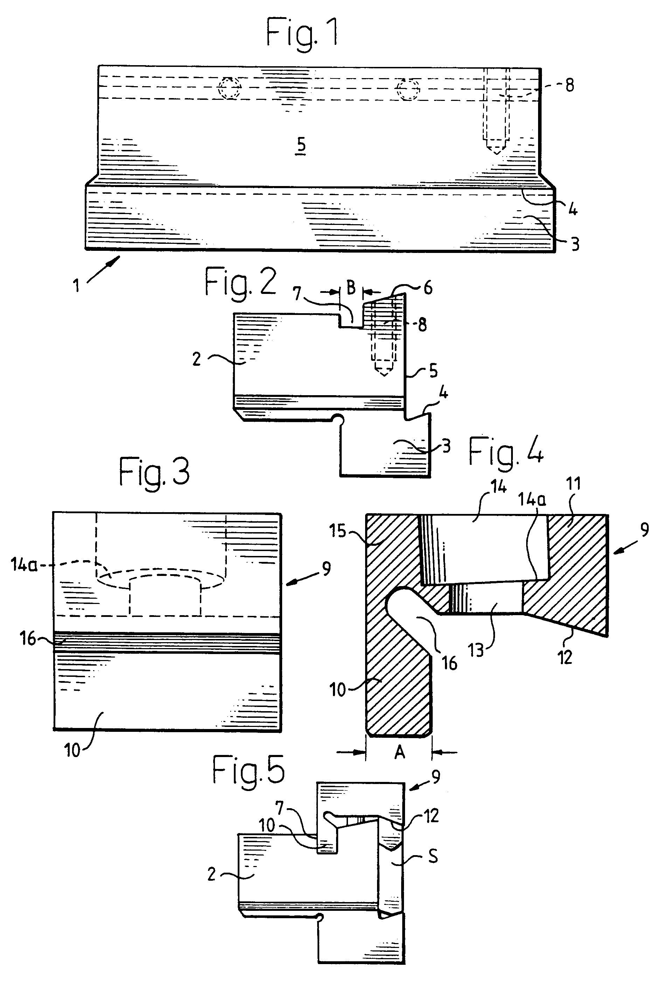

One preferred embodiment of the device embodying this invention will be described more in detail in the following with references to the accompanying drawings, in which
Figure 1 is a side view of the tool holder main part seen from the outside,
Figure 2 if an end view of the same part from one end,
Figure 3 is a front end view on a larger scale of a clamping piece,
Figure 4 is a side view of the same, and
Figure 5 is an end view on the same scale as Figures 1 and 2 of the clamping piece mounted on the main part and with an insert holder.

The main part, i.e. the tool holder 1, is formed by a piece of steel by milling or the like machining given a specific shape.

At part 1 there is at the rear end, i.e. on the side which in mounted position will be facing the turret body, an elongated extending portion 2, which forms a specific portion to be inserted into a groove at the turret body and secured therein by means of known, not shown wedging means inserted between the extending portion and the opposite wall of the groove.

The front side of part 1 shows at the lower portion thereof an elongated projection 3 having a downwardly and inwardly inclined upper edge 4 serving as an abutment for an insert holder placed thereon. A front face 5 adjoins to this abutment and defines together with it two sides of the seat for the insert holder. The front face 5 changes over into a rearwardly and downwardly inclined surface 6 which inclines towards a groove 7 arranged in the upwardly facing side of the part, said groove having sides parallel with the front face 5 and bottom essentially at right angles with the sided. The main part also includes at least two threaded bores 8 extending essentially parallel with the front side 5 from the inclined surface 6.

To each main part are attached at least two clamping pieces designated 9. Each clamping piece includes an inverted essentially L-shaped piece of material having insignificant length and preferrably manufactured by machining rod material into desired sectional shape and subsequent cutting in needed lengthes.

Each clamping piece has a downwardly directed leg 10 having a thickness A closely corresponding with the width B at the longitudinal groove 7. The engagement between said leg and the groove ensures a secure localization of the clamping piece.

The other leg 11 has at the underside of the outer end an obliquely arranged surface 12 which serves as contact surface towards the insert holder edge and also presents a bore 13 essentially parallel with the former leg 10. The bore is connected to a counter sunk seat or abutment portion 14 for the head of a screw which is threaded through the bore 12 into any one of the threaded bores 8 of the main part and this counter sunk seat is obliquely arranged so that the portion 14a thereof adjacent the outer end of the leg is higher and consequently will meet the head of the screw first and serve as abutment for the same.

At the transition 15 between the two legs there is an obliquely arranged recess or slot 16 which gives to two legs a mutual mobility.

After securing the main part 1 of the tool holder in a per se known way at the turret body groove, the insert holder S will be mounted and this takes place by placing the insert holder with the lower side thereof towards the lower obliquely arranged edge 4 and engaging the front surface 5. The clamping pieces 9 are secured in desired positions aligned with the bores 8 by inserting the rear leg 10 into the groove 7 and threading the screws 8 into the bores. As soon as a screw head reaches the front portion 14a of the counter sunk seat 14, the upper leg will swing over the transition 15 between the two legs whereby the obliquely arranged surface 12 will contact the insert holder S and press the same downwardly towards the opposite abutment 4 and simultaneously inwardly towards the surface 5. The more the screw is tensioned, the leg 11 will swing more downwardly and to allow this the bore 13 for the screw is so shaped that the screw shaft will run freely therethrough even if the leg is swung out of its original position.

By arranging a recess 16 the transition 15 between the two legs 10 and 11 there is achieved a hinge function. The pivot axis thereof will be situated at a rather high level and this result in an efficient press action towards the insert holder. This is the result of the lever relations existing where the fulcrum of the one armed lever, i.e. the transition portion 15, will be situated higher than a normal plane perpendicular to the upper edge of the insert bolder and the contact surface at the end of the leg. The fork resulting from the tensioning of the screw and acting at the contact point between the end of the leg 11 and the insert holder may be divided in one component parallel with the plane of the insert holder and the front face 5 and one inwardly directed component perpendicular thereto. Consequently on tightening the screws the insert holder will be pressed downwardly towards the opposite abutment 4 and simultaneously against the front side 5 of the main part 1.

The invention is not restricted to the above described embodiment but may be modified within the scope of the attached claim 1.

## Claims

1. Tool holder (1) for receiving insert holders and similar devices (5) at tool carrying means such as turret bodies, wherein the tool holder (1) has a seat for an insert holder (S) including one rigid abutment (4) for one edge of the insert holder, one lateral abutment (5) and one or more clamping pieces (9) intended to engage an opposite edge of the insert holder, wherein at the main part (1) of the tool holder remote from the seat is arranged an elongated groove (7), and along said groove between the same and the seat, bores (8) for set screws and wherein each clamping piece (9) is essentially L-shaped having one leg (10) intended to be received in the longitudinal groove (7) and one leg (11) having a bore (14) for a set screw and a free end presenting a contact surface (12) for the other edge of the insert holder (S),
**characterized** in that the elongated groove (7) has a width closely corresponding to the thickness of the one leg (10) of the clamping piece (9) said leg (10) being rigidly received in said groove (7), that at the transition (15) between the two legs (10,11) of the clamping piece (9) is arranged a slot or recess (16) enhancing the mutual bendability of the legs (10,11), that the bore for the set screw at the other clamping piece leg has a surrounding counter sunk abutment seat for the head of a set screw inserted through the bores, that said abutment seat of the other leg is obliquely arranged in order to concentrate the press force of the screw head to the portion (14a) of the seat adjacent the insert holder engaging end of the leg, and that the one leg (10) rigidly received in the groove (7); said contact surface (12) at the end of the other leg (11), the point or area of engagement of the screw head at the abutment seat (14a) and the bending enhancing slot (16) being so arranged that on tightening of the set screw said contact surface (12) engages the insert holder (S) edge with a force acting both along said lateral abutment (5) of the tool holder towards the rigid abutment (4) and inwardly towards said lateral abutment (5) of the tool holder (S).

2. Arrangement according to claim 1,
**characterized** in that at the seat (14) enclosing the bore (13) of the other leg (11) and having an obliquely arranged abutment seat, the portion (14a) of said abutment seat adjacent the free insert holder engaging end of said leg is higher than the rest and arranged to be engaged by the head of a screw threaded into the tool holder body.

3. Arrangement according to claims 1 or 2,
**characterized** in that the insert holder (S) engaging end portion (12) of the other leg (11), contacting or engaging the edge of the insert holder (S) is obliquely arranged.

## Patentansprüche

1. Werkzeughalter (1) zum Aufnehmen von Einsatzhaltern und ähnlichen Einrichtungen (5) an werkzeugtragenden Einrichtungen, wie beispielsweise Revolverkopfkörpern, wobei der Werkzeughalter (1) einen Sitz für einen Einsatzhalter (S) aufweist, der einen starren Anschlag (4) für einen Rand des Einsatzhalters, einen seitlichen Anschlag (5) und eines oder mehrere Klemmteile (9) einschließt, die dazu bestimmt sind, einen gegenüberliegenden Rand des Einsatzhalters zu erfassen, wobei am Hauptteil (1) des Werkzeughalters vom Sitz entfernt eine langgestreckte Nut (7) und längs der Nut zwischen dieser und dem Sitz Bohrungen (8) für Kopfschrauben vorgesehen sind, und wobei jedes Klemmteil (9) im wesentlichen L-förmig ist und einen Schenkel (10), der dazu bestimmt ist, in der längsverlaufenden Nut (7) aufgenommen zu werden, und einen Schenkel (11) mit einer Bohrung (14) für eine Kopfschraube aufweist, dessen freies Ende eine Kontaktfläche (12) zum anderen Rand des Einsatzhalters (S) bildet, dadurch gekennzeichnet, daß die langgestreckte Nut (7) eine Breite hat, die nahezu der Dicke des einen Schenkels (10) des Klemmteils (9) entspricht, wobei der Schenkel (10) starr in der Nut (7) aufgenommen ist, daß am Übergang (15) zwischen den beiden Schenkeln (10, 11) des Klemmteils (9) ein Schlitz oder eine Aussparung (16) angeordnet ist, die die gegenseitige Biegbarkeit der Schenkel (10, 11) erhöht, daß die Bohrung für die Kopfschraube an dem anderen Klemmteilschenkel einen als umlaufende Senke ausgebildeten Anschlagsitz für den Kopf einer Kopfschrauben aufweist, die durch die Bohrungen eingesetzt wird, daß der Anschlagsitz des anderen Schenkels schräg angeordnet ist, um die Druckkraft des Schraubenkopfes auf den Teil (14a) des Sitzes neben dem Einsatzhalter zu konzentrieren, der das Ende des Schenkels erfaßt, und daß der eine Schenkel (10) starr in der Nut (7) aufgenommen ist, wobei die Kontaktflache (12) am Ende des anderen Schenkels (11), der Eingriffspunkt oder der Eingriffsbereich des Schraubenkopfes am Anschlagsitz (14a) und der die Biegung verstärkende Schlitz (16) so angeordnet sind, daß beim Anziehen der Kopfschraube die Kontaktfläche (12) den Rand des Einsatzhalters (S) mit einer Kraft erfaßt, die sowohl längs des seitlichen Anschlags (5) des Werkzeughalters in Richtung auf den starren Anschlag (4) als auch nach innen in Richtung auf den seitlichen Anschlag (5) des Werkzeughalters (S) wirkt.

2. Anordnung nach Anspruch 1, dadurch gekennzeichnet, daß am Sitz (14), der die Bohrung (13) des anderen Schenkels (11) umgibt und einen schräg verlaufenden Anschlagsitz aufweist, der Teil (14a) des Anschlagsitzes neben dem den Einsatzhalter erfassenden freien Ende des Schenkels höher als der Rest liegt und so angeordnet ist, daß er vom Kopf einer Schraube erfaßt wird, die in den Werkzeughalterkörper geschraubt wird.

3. Anordnung nach Anspruch 1 oder 2, dadurch gekennzeichnet, daß der den Einsatzhalter (S) erfassende Endabschnitt (12) des anderen Schenkels (11), der den Rand des Einsatzhalters (S) kontaktiert oder erfaßt, schräg angeordnet ist.

## Revendications

1. Porte-outil (1) pour recevoir des supports d'insert et dispositifs similaires (S) au niveau de moyens de support d'outils tels que des corps de tourelle, dans lequel le porte-outil (1) comporte un siège pour un support d'insert (S) comprenant une butée rigide (4) pour un bord du support d'insert, une butée latérale (5) et une ou plusieurs pièces de blocage (9) destinées à entrer en contact avec un bord opposé du support d'insert, dans lequel, au niveau de la partie principale (1) du porte-outil éloignée du siège est disposée une rainure allongée (7), et le long de la rainure, entre celle-ci et le siège, des alésages (8) pour des vis de fixation et dans lequel chaque pièce de blocage (9) a une forme générale en L comprenant une branche (10) destinée à être reçue dans la rainure longitudinale (7) et une branche (11) munie d'un alésage (14) pour une vis de fixation et une extrémité libre présentant une surface de contact (12) pour le bord opposé du support d'insert (S);
caractérisé en ce que la rainure allongée (7) a une largeur qui correspond étroitement à l'épaisseur de la première branche (10) de la pièce de blocage (9), ladite branche (10) étant reçue de façon rigide dans la rainure (7), en ce que, au niveau de la transition (15) entre les deux branches (10, 11) de la pièce de blocage (9), est ménagé une fente ou un évidement (16) accroissant la flexibilité mutuelle des branches (10, 11), en ce que l'alésage pour la vis de fixation au niveau de l'autre branche de la pièce de blocage comprend un siège de butée contre-percé pour la tête d'une vis de fixation insérée dans les alésages, en ce que le siège de butée de l'autre branche est disposé de façon oblique pour concentrer la force de pression de la tête de vis sur la partie (14a) du siège adjacente à l'extrémité de la branche s'engageant avec le support d'insert, et en ce que la première branche (10) est reçue rigidement dans la rainure (7) ; la surface de contact (12) à l'extrémité de l'autre branche (11), le point ou la zone d'engagement de la tête de vis au niveau du siège de butée (14a) et la fente renforçant la flexibilité (16) étant disposés de sorte que, par suite d'un serrage de la vis de fixation, ladite surface de contact (12) entre en contact avec le bord du support d'insert (S) avec une force agissant à la fois le long de ladite butée latérale (5) du porte-outil vers la butée rigide (4) et vers l'intérieur vers la butée latérale (5) du porte-outil (S).

2. Agencement selon la revendication 1, caractérisé en ce que, au niveau du siège (14) entourant l'alésage (13) de l'autre branche (11) et ayant un siège de butée disposé de façon oblique, la partie (14a) du siège de butée adjacente à l'extrémité de la branche s'engageant avec le support d'insert libre est plus élevée que le reste et est disposée pour entrer en contact avec la tête d'une vis vissée dans le corps du porte-outil.

3. Agencement selon la revendication 1 ou 2, caractérisé en ce que la partie d'extrémité (12) de l'autre branche (11) venant en contact avec le support d'insert (S), venant en contact ou s'engageant avec le bord du support d'insert (S), est disposée obliquement.
